# EUROPEAN PATENT SPECIFICATION

(11) **EP 2 286 312 B1**
(45) Date of publication and mention of the grant of the patent: **06.01.2016**
(21) Application number: 09766942.8
(22) Date of filing: 15.06.2009
(51) Int. Cl.: G05G 1/36, B60K 26/02

(54) **CONTROL SYSTEM FOR PROPELLING A VEHICLE AND A METHOD FOR SUCH A SYSTEM**
STEUERSYSTEM ZUM ANTREIBEN EINES FAHRZEUGS UND VERFAHREN FÜR EIN SOLCHES SYSTEM
SYSTÈME DE COMMANDE PERMETTANT DE PROPULSER UN VÉHICULE ET PROCÉDÉ POUR UN TEL SYSTÈME

(30) Priority: 18.06.2008 SE 0801419
(43) Date of publication of application: 23.02.2011
(73) Proprietor: Cargotec Patenter AB, 341 81 Ljungby (SE)
(72) Inventor: LÖNN, Jan, S-SE-340 14 Lagan (SE)
(74) Representative: Andrén, Bertil
(86) International application number: PCT/SE2009/050735
(87) International publication number: WO 2009/154552

(56) References cited:
- WO-A1-2004/097544
- DE-A1- 10 012 165
- GB-A- 1 506 803
- GB-A- 2 309 287
- US-A1- 2005 103 555

## Description

The present invention relates to a system for controlling the propulsion of a goods or material handling vehicle, said system comprising:
- a propulsion system for accelerating and decelerating the vehicle;
- a first pedal for driving in a first direction;
- a second pedal for driving in a second direction, which is opposite to the first direction;
- a first pedal position sensing device, which is adapted to sense the deviation of the first pedal from a predetermined neutral position;
- a second pedal position sensing device, which is adapted to sense the deviation of the second pedal from a predetermined neutral position; and
- a control unit, which is adapted, on the one hand, to receive information about the positions of the pedals from the pedal position sensing devices and, on the other hand, to calculate as a function of said deviations, and to transmit, control signals to the propulsion system in order to generate a driving or braking torque.

The invention also relates to a method in such a system.

Vehicles having two foot operated pedals, one pedal for driving forward and one pedal for driving backward, have been on the market for many years, *inter alia*, in vehicles having a hydrostatic transmission. In one variant of such a system, both the acceleration of the vehicle and the deceleration of the vehicle in the current direction of travel are controlled with one and the same pedal, i.e. with the pedal being designated to the current direction of travel, for example driving forward. If the direction of travel is changed, e.g. from driving forward to driving backward, the second pedal takes over the role of the first pedal, wherein the second pedal becomes active and controls the acceleration and deceleration of the vehicle in the new direction of travel, i.e. backward. In this connection, a type of pedals has been used, where the pedals are mechanically interconnected so that the non-active pedal is pushed up in the same proportion as the active pedal is depressed. GB-A 3 309 287 discloses an arrangement where in order to avoid the risk of inadvertently operating both pedals simultaneously, interlinking of the pedals is necessary, and depressing of the active pedal produces a substantially lesser raising of the other pedal. Another arrangement with mechanically interconnected pedals is described in WO 2004/097544, where the two pedals are blocked in their neutral positions when a pressure is applied on them simultaneously, and where, furthermore, one of the pedals is blocked in its neutral position when a pressure is applied on the other pedal in order to drive the vehicle in the other direction.

However, a certain degree of complexity is required in the mechanical arrangement in order to get pedals being interconnected in the above fashion to function efficiently.

Other arrangements rely on pedals, which are mechanically uncoupled and control movement of the vehicle in the forward/reverse direction. One example of such a pedal arrangement is known from GB-A 1 506 803, where each pedal can be actuated separately, so that there is a risk of both pedals inadvertently being operated simultaneously, Another example is briefly discussed in GB-A 3 309 287, where the conclusion is that in order to avoid the risk of inadvertently operating both pedals simultaneously, interlinking of the pedals is necessary.

The object of the present invention is to achieve a system which obviates the above-mentioned problems, and which, accordingly, is designed so that it brings about a reliable function of the pedals without any mechanical connection between them.

The system according to the invention is characterized in that the control unit comprises a computer unit which, starting from a state where said pedals are in their neutral positions, is adapted to assign the status of active pedal to the one of said pedals which is caused to deviate from its neutral position first, and that the computer unit is adapted to assign the status of inactive pedal to the one of said pedals which is caused to deviate from its neutral position last, or alternatively not at all.

The method according to the invention is characterized in the step that a computer unit in the control unit, starting from a state where said pedals are in their neutral positions, assigns the status of active pedal to the one of said pedals which is caused to deviate from its neutral position first, and that the computer unit assigns the status of inactive pedal to the one of said pedals which is caused to deviate from its neutral position last, or alternatively not at all.

The invention will be described more closely in the following with reference to the Figures.
Figure 1 schematically shows portions of a control system according to a first embodiment of the invention.
Figure 2 shows pedal positions of a pedal in the system of Figure 1.
Figure 3 shows a pedal system in a control system according to a second embodiment of the invention.

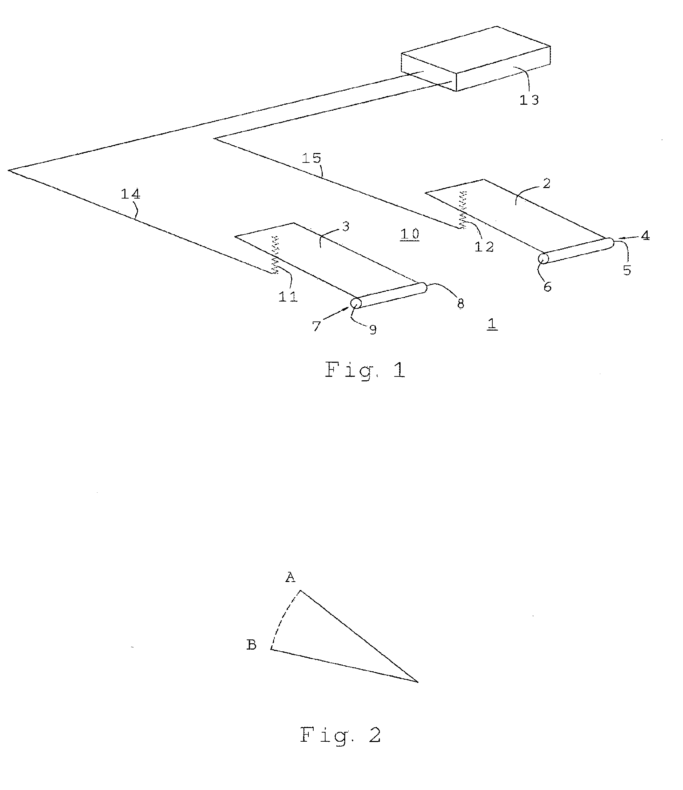

Figure 1 schematically shows a system for controlling the propulsion of a goods or material handling vehicle in the form of a forklift truck. As used herein, propulsion refers to the driving of the forklift truck in a direction forward or backward, respectively, as desired. The control system comprises a pair of pedals being mounted on the floor 1 in the driver's cab of the forklift truck. The pair of pedals comprises a first foot operated pedal 2 for driving the forklift truck in a first direction, e.g. forward, and a second foot operated pedal 3 for driving the forklift truck in a second direction. i.e. backward according to the example. Thus, according to the example, the pedal 2 is the active pedal when driving forward and the pedal 3 is the active pedal when driving backward. Accordingly, the control system is a twin pedal system, where the driver of the forklift truck operates one pedal with one of his/her feet and the other pedal with his/her other foot. In the present example, the driver operates the forward pedal 2 with his/her right foot and the reverse pedal 3 with his/her left foot. The forward pedal 2 is rigidly connected to a pivot axle 4, which is pivotally mounted in two upwardly directed bearing elements 5, 6, which are rigidly connected to the cab floor 1. The reverse pedal 3 is also rigidly connected to a pivot axle 7 which is coaxial with the pivot axle 4 of the first pedal 2, and which is pivotally mounted in two upwardly directed bearing elements 8, 9, also being rigidly connected to the cab floor 1. The pivot axle 7 does not have to be coaxial with the pivot axle 4. Alternatively, the pivot axle 7 can be angled relative to the pivot axle 4, which can be advantageous from an ergonomic point of view. The pedals 2, 3 are arranged at a suitable distance from each other, so that a space 10 is formed therebetween.

The control system further comprises a first pedal position sensing device, in the form of a first potentiometer 11, which is adapted to sense the position of the forward pedal 2, and a second pedal position sensing device, in the form of a second potentiometer 12, which is adapted to sense the position of the reverse pedal 3. The control system further comprises a control unit 13, which is adapted to continuously receive information about the positions of the pedals 2, 3 from the potentiometers 11, 12, and to calculate as a function of these positions, and to transmit, control signals to a propulsion system in the forklift truck. The potentiometers 11, 12 are connected to the control unit 13 via communication lines 14, 15, wherein said position information has the form of voltage signals within a predetermined voltage range, for example 0-5 volts, said voltage signals being functions of the positions of the pedals 2, 3. The control unit 13 comprises a computer unit with a microprocessor, which is adapted to process the voltage signals and to calculate said control signals.

The propulsion system is adapted to generate a driving or braking torque as a function of the control signals from the control system. The propulsion system can be a hydrostatic system, an electrical system, a system with a converter gearbox, or any other propulsion system which is suitable for the propulsion of goods or material handling vehicles. Such propulsion systems are well known *per se,* and will not be described further here.

Each pedal 2; 3 is biased by a suitable spring device (not shown) in order to assume an upper, neutral position when the pedal 2; 3 is not used. The driver causes the pedal 2; 3 to deviate from this neutral position by depressing the pedal with the aid of his/her foot. Thereby, each pedal 2; 3 is freely operable within a control range A-B (see Figure 2), between a first end position A, corresponding to said neutral position, and a second end position B, corresponding to maximum pedal deflection.

The control unit 13 can be configured according to one of the following three control options:
i The active pedal is used to control both the driving and the braking torque. The inactive pedal is not used.
ii The active pedal is used to control the driving torque, and both pedals, the active one and the inactive one, are used to control the braking torque.
iii The active pedal is used to control the driving torque, and the inactive pedal is used to control the braking torque.

In all three control options, the driving torque is thus a function of only the active pedal, whereas the braking torque is a function of only the active pedal (control option i), both the active and the inactive pedal (control option ii), or only the inactive pedal (control option iii).

As used herein, active pedal refers to the pedal being associated with the current direction of travel, i.e. the right pedal 2 if the vehicle is driven in the forward direction of travel and the left pedal 3 if the vehicle is driven in the backward direction of travel. Driving torque refers to the torque tending to move the vehicle forward or backward, depending on the current direction of travel, and braking torque refers to the torque tending to decelerate the vehicle in its movement forward or backward.

When the control unit 13 is configured according to i, the pedal position signal from the active pedal is used as an input signal to control both the driving and the braking torque. In other words, in this case the driving torque and the braking torque are a function only of the position of the active pedal, and the inactive pedal is not used. The driving torque increases or is constant with increased pedal deflection. Accordingly, the second end position B corresponds to a maximum driving torque of the vehicle, i.e. 100 % of the maximum available torque, and the first end position A corresponds to a minimum driving torque of the vehicle, which preferably is 0 % of the maximum available driving torque. If the driver reduces the pedal deflection, i.e. goes from a first driving torque to a second, lower driving torque, the control unit 13 causes the propulsion system to generate a braking torque, so that the second driving torque is achieved. Accordingly, the driver controls the forward and backward movement of the vehicle by operating the respective pedal 2 and 3 between the end positions A and B of the pedal.

If the control unit 13 is configured according to control option iii, the pedal position signal from the active pedal is used as an input signal for the driving torque, whereas the pedal position signal from the inactive pedal is used as an input signal for the braking torque. In other words, the driving torque according to iii is a function of the position of the active pedal, and the braking torque is a function of the position of the inactive pedal. Accordingly, in this situation, both the active and the inactive pedal are used when propelling the vehicle.

If the control unit 13 is configured according to control option ii, the pedal position signal from the active pedal is used as an input signal for the driving torque, whereas the pedal position signal from both the active and the inactive pedal are used as an input signal for the braking torque. In other words, the driving torque according to ii is a function of the position of the active pedal, whereas the braking torque is a function of the position of both the active and the inactive pedal. Accordingly, in this situation, both the active and the inactive pedal are used when driving the vehicle.

Accordingly, it should be emphasized that also the inactive pedal can be used when driving the vehicle, which is the case in control options ii and iii.

The system lacks mechanical connections preventing the driver from depressing both the forward pedal 2 and the reverse pedal 3 simultaneously. Accordingly, the movement of the forward pedal 2 is mechanically uncoupled from the movement of the reverse pedal 3. According to the invention, the control unit 13, or more precisely the computer unit of the control unit 13, is programmed so that a change of direction of travel from a first direction of travel to a second direction of travel only can take place when the pedal for the first direction of travel, i.e. the initially active pedal, is in its neutral position and the pedal for the second, new direction of travel is depressed from its neutral position. In other words, the change of active pedal takes place such that the pedal for the first direction of travel is moved to its neutral position, after which the pedal for the second direction of travel is depressed and thus takes over the role as active pedal from the pedal for the first direction of travel. If, for example, the driver, while driving the vehicle forward, wants to reverse the vehicle, he/she first has to release the forward pedal 2 up to the neutral position A and then to depress the reverse pedal 3 from its neutral position A. Thereby, the undesired effect is avoided that the vehicle starts to reverse immediately when the forward pedal 2 is released, if the reverse pedal 3 is in a depressed position. Accordingly, the starting point in a driving situation is that both pedals 2, 3 are in their neutral positions A. Accordingly, the pedal which is depressed first becomes the active pedal, and the pedal which is depressed last, or is not depressed at all, becomes the inactive pedal. In practice, this occurs by the computer unit assigning the status of active pedal to the one of the pedals which is depressed first, i.e. which is brought to deviate from its neutral position, and the status of inactive pedal to the one of the pedals which is depressed last or, as in control option i, which is not depressed at all.

When the computer unit has identified which of the pedals are active and inactive, respectively, the continued propulsion of the vehicle occurs according to one of the control options i-iii above. The driver preferably has a possibility to select which one of the control options is to be applied via a control panel connected to the computer unit. Alternatively, one of the control options can be predeterminedly programmed into the computer unit.

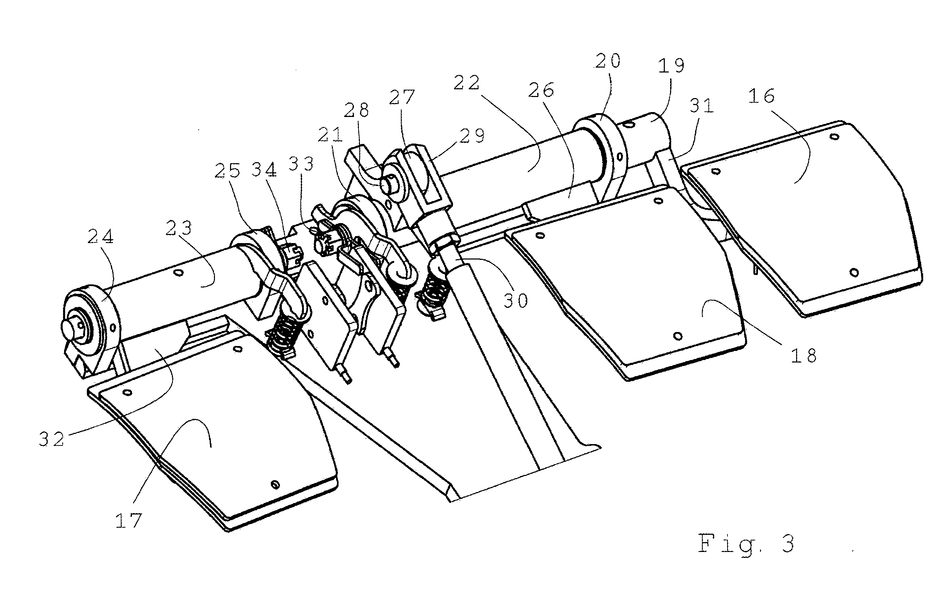

Fig. 3 shows a pedal system in a second embodiment of a control system according to the invention. In this case, the pedal system comprises a first pedal 16, positioned to the right, a second pedal 17, positioned to the left, and a third, intermediate pedal 18, which is positioned between the pedals 16 and 17. The right pedal 16 is intended for driving the forklift truck in the forward direction of travel and the left pedal 17 is intended for driving the forklift truck in the backward direction of travel. Accordingly, the pedal 16 constitutes the active pedal when driving forward, and the pedal 17 constitutes the active pedal when driving backward.

A first pivot axle 19 is pivotally mounted in a first pair of axle supports 20 and 21, respectively. A second, tubular pivot axle 22 is arranged coaxially with the first pivot axle 19 and between the axle supports 20 and 21, said second pivot axle 22 also being pivotally mounted in the axle supports 20 and 21. The second pivot axle 22 has an internal diameter, which is slightly larger than the diameter of the first pivot axle 19, so that the second pivot axle 22 can be rotated substantially frictionlessly relative to the first pivot axle 19.

A third pivot axle 23 is pivotally mounted between a second pair of axle supports 24 and 25, respectively, coaxially with the pivot axles 19 and 22, but to the left of them. The pivot axle 23 does not have to be coaxial with the pivot axles 19 and 23. Alternatively, the pivot axle 23 can be angled relative to the pivot axles 19 and 22, which can be advantageous from an ergonomic point of view.

The braking pedal 18 is rigidly connected to the cylindrical outer surface of the second pivot axle 22 via a braking pedal arm 26. Furthermore, a link lug 27 is rigidly mounted to the cylindrical outer surface of the second pivot axle 22. The link lug 27 projects from the pivot axle 22 and exhibits a through hole for articulated cooperation, via an pivot pin 28, with a fork member 29, which is adapted to actuate a brake servo (not shown) via an adjustable pressure rod 30.

The first pedal 16 is rigidly connected to the first pivot axle 19 via a pedal arm 31, at the outer end of the pivot axle. In the same way, the second pedal 17 is connected to the third pivot axle 23 via a pedal arm 32.

A first pedal position sensing device, in the form of a sensor 33, is arranged at the inner end of the first pivot axle 19 for sensing the position of the first pedal 16. In the same way, a second pedal position sensing device, in the form of a sensor 34, is arranged at the inner end of the third pivot axle 23 for sensing the position of the second pedal 16. The sensors 33 and 34 can be contactless, e.g. optical, capacitive or inductive, or be based on some form of transmission of force between the pivot axle and the sensor. Such sensors are known *per se* and will not be described more closely herein.

Like the pedals in the embodiment described in connection with Fig. 1, each pedal 16 and 17 is biased by a suitable spring device (not shown) in order to assume an upper, neutral position when the pedal 16; 17 is not used. Each pedal 16; 17 is freely operable within a control range A-B (see Figure 2), between a first end position A, corresponding to said neutral position, and a second end position B, corresponding to maximum pedal deflection. The sensors 33 and 34 are connected to the control unit (not shown in Fig. 3) of the propulsion system, which is adapted to assign the status of active pedal to the pedal 16 or 17 in the same way as has been described above in connection with Fig. 1 and 2, and to then cause the propulsion system to generate a driving or braking torque according to one of the above-described control options i-iii.

The intermediate pedal 18 is a braking pedal, which constitutes a part of a braking system in the forklift tuck. The braking system comprises brakes (not shown), which are arranged at the wheels of the forklift truck for actuating the wheels with a braking torque, via the brake servo, when the braking pedal 18 is depressed. The braking system is preferably adapted to operate completely independently of the positions of the pedals 16 and 17, and independently of the direction in which the forklift truck is driven. In such an independent configuration, the braking system provides a redundant braking function, supplementing the braking function provided by the above-described control options i-iii.

## Claims

1. A system for controlling the propulsion of a goods or material handling vehicle, said system comprising:
- a propulsion system for accelerating and decelerating the vehicle;
- a first pedal (2, 16) for driving in a first direction;
- a second pedal (3, 17) for driving in a second direction, which is opposite to the first direction, said second pedal (3, 17) being mechanically uncoupled from the first pedal (2, 16);
- a first pedal position sensing device (11, 33), which is adapted to sense the deviation of the first pedal (2, 16) from a predetermined neutral position;
- a second pedal position sensing device (12, 34), which is adapted to sense the deviation of the second pedal (3, 17) from a predetermined neutral position; and
- a control unit (13), which is adapted, on the one hand, to receive information about the positions of the pedals (2, 3, 16, 17) from the pedal position sensing devices (11, 12, 33, 34) and, on the other hand, to calculate as a function of said deviations, and to transmit, control signals to the propulsion system in order to generate a driving or braking torque,
**characterized in that** the control unit (13) comprises a computer unit which, starting from a state where said pedals (2, 3, 16, 17) are in their neutral positions, is adapted to calculate the driving torque as a function of the position of the one of said pedals (2, 3, 16, 17) which is caused to deviate from its neutral position first, and that the computer unit is adapted to calculate the braking torque as a function of:
(i) the position of the one of said pedals (2, 3, 16, 17) which is caused to deviate from its neutral position first; or
(ii) the position of the one of said pedals (2, 3, 16, 17) which is caused to deviate from its neutral position first and the position of the one of said pedals (2, 3, 16, 17) which is caused to deviate from its neutral position last; or
(iii) the position of the one of said pedals (2, 3, 16, 17) which is caused to deviate from its neutral position last,
wherein the computer unit is adapted to allow a change of direction of travel from the first direction to the second direction only when the first pedal (2, 16) is in its neutral position and the second pedal (3, 17) is caused to deviate from its neutral position.

2. The system according to claim 1, **characterized in that** said neutral positions are the upper end positions of the respective pedal (2, 3, 16, 17).

3. The system according to any one of the claims 1 and 2, **characterized in that** it comprises a braking system, which comprises a braking pedal (18) being separate from said first and second pedals (2, 3, 16, 17), said braking system being adapted to generate a braking torque when the braking pedal (18) is depressed, independently of the positions of the first and second pedals (16, 17), and independently of the direction in which the goods or material handling vehicle is being driven.

4. A method in a system for controlling the propulsion of a goods or material handling vehicle, said system comprising
- a propulsion system for accelerating and decelerating the vehicle,
- a first pedal (2, 16) for driving in a first direction,
- a second pedal (3, 17) for driving in a second direction, which is opposite to the first direction, said second pedal (3, 17) being mechanically uncoupled from the first pedal (2, 16),
- a first pedal position sensing device (11, 33), which is adapted to sense the deviation of the first pedal (2, 16) from a predetermined neutral position,
- a second pedal position sensing device (12, 34), which is adapted to sense the deviation of the second pedal (3, 17) from a predetermined neutral position, and
- a control unit (13), which is adapted, on the one hand, to receive information about the positions of the pedals (2, 3, 16, 17) from the pedal position sensing devices (11, 12, 33, 34) and, on the other hand, to calculate as a function of said deviations, and to transmit, control signals to the propulsion system in order to generate a driving or braking torque,
**characterized in** the step of a computer unit in the control unit (13), while starting from a state where said pedals (2, 3, 16, 17) are in their neutral positions, calculating the driving torque as a function of the position of the one of said pedals (2, 3, 16, 17) which is caused to deviate from its neutral position first, and that the computer unit calculates the braking torque as a function of:
(i) the position of the one of said pedals (2, 3, 16, 17) which is caused to deviate from its neutral position first; or
(ii) the position of the one of said pedals (2, 3, 16, 17) which is caused to deviate from its neutral position first and the position of the one of said pedals (2, 3, 16, 17) which is caused to deviate from its neutral position last; or
(iii) the position of the one of said pedals (2, 3, 16, 17) which is caused to deviate from its neutral position last,
wherein the computer unit allows a change of direction of travel from the first direction to the second direction only when the first pedal (2, 16) is in its neutral position and the second pedal (3, 17) is caused to deviate from its neutral position.

## Patentansprüche

1. System zum Steuern des Antriebs eines Waren- oder Materialhandhabungsfahrzeugs, wobei das System Folgendes umfasst:
- ein Antriebssystem zum Beschleunigen und Verlangsamen des Fahrzeugs;
- ein erstes Pedal (2, 16) zum Fahren in eine erste Richtung;
- ein zweites Pedal (3, 17) zum Fahren in eine zweite Richtung, die der ersten Richtung entgegengesetzt ist, wobei das zweite Pedal (3, 17) vom ersten Pedal (2, 16) mechanisch gelöst ist;
- eine erste Vorrichtung zum Erkennen der Pedalposition (11, 33), die so ausgebildet ist, dass sie das Abweichen des ersten Pedals (2, 16) von einer vorgegebenen neutralen Position erkennt;
- eine zweite Vorrichtung zum Erkennen der Pedalposition (12, 34), die so ausgebildet ist, dass sie das Abweichen des zweiten Pedals (3, 17) von einer vorgegebenen neutralen Position erkennt; und
- eine Steuereinheit (13), die so ausgebildet ist, dass sie einerseits Informationen über die Positionen der Pedale (2, 3, 16, 17) von den Vorrichtungen zum Erkennen der Pedalposition (11, 12, 33, 34) empfängt und andererseits Steuersignale als Funktion der Abweichungen berechnet und an das Antriebssystem überträgt, um ein Antriebs-oder Bremsmoment zu erzeugen,
**dadurch gekennzeichnet, dass** die Steuereinheit (13) eine Rechnereinheit umfasst, die ausgehend von einem Zustand, in dem sich die Pedale (2, 3, 16, 17) in ihren neutralen Positionen befinden, so ausgebildet ist, dass sie das Antriebsmoment als Funktion der Position des einen der Pedale (2, 3, 16, 17) berechnet, das zuerst veranlasst wird, von seiner neutralen Position abzuweichen, und dass die Rechnereinheit so ausgebildet ist, dass sie das Bremsmoment als Funktion
(i) der Position des einen der Pedale (2, 3, 16, 17), das zuerst veranlasst wird, von seiner neutralen Position abzuweichen; oder
(ii) der Position des einen der Pedale (2, 3, 16, 17), das zuerst veranlasst wird, von seiner neutralen Position abzuweichen, und der Position des einen der Pedale (2, 3, 16, 17), das zuletzt veranlasst wird, von seiner neutralen Position abzuweichen; oder
(iii) der Position des einen der Pedale (2, 3, 16, 17), das zuletzt veranlasst wird, von seiner neutralen Position abzuweichen, berechnet wird,
wobei die Rechnereinheit so ausgebildet ist, dass sie einen Fahrtrichtungswechsel von der ersten Richtung in die zweite Richtung nur dann ermöglicht, wenn sich das erste Pedal (2, 16) in seiner neutralen Position befindet, und das zweite Pedal (3, 17) veranlasst wird, von seiner neutralen Position abzuweichen.

2. System nach Anspruch 1, **dadurch gekennzeichnet, dass** die neutralen Positionen die oberen Endpositionen der jeweiligen Pedale (2, 3, 16, 17) sind.

3. System nach einem der Ansprüche 1 und 2, **dadurch gekennzeichnet, dass** es ein Bremssystem umfasst, das ein Bremspedal (18) umfasst, das von dem ersten und dem zweiten Pedal (2, 3 16, 17) getrennt ist, wobei das Bremssystem so ausgebildet ist, dass es unabhängig von den Positionen des ersten und des zweiten Pedals (16, 17) und unabhängig von der Richtung, in die das Waren- oder Materialhandhabungsfahrzeug gefahren wird, ein Bremsmoment erzeugt, wenn das Bremspedal (18) heruntergedrückt wird.

4. Verfahren in einem System zum Steuern des Antriebs eines Waren- oder Materialhandhabungsfahrzeugs, wobei das System Folgendes umfasst:
- ein Antriebssystem zum Beschleunigen und Verlangsamen des Fahrzeugs,
- ein erstes Pedal (3, 17) zum Fahren in eine erste Richtung,
- ein zweites Pedal (3, 17) zum Fahren in eine zweite Richtung, die der ersten Richtung entgegengesetzt ist, wobei das zweite Pedal (3, 17) vom ersten Pedal (2, 16) mechanisch gelöst ist,
- eine erste Vorrichtung zum Erkennen der Pedalposition (11, 33), die so ausgebildet ist, dass sie das Abweichen des ersten Pedals (2, 16) von einer vorgegebenen neutralen Position erkennt,
- eine zweite Vorrichtung zum Erkennen der Pedalposition (12, 34), die so ausgebildet ist, dass sie das Abweichen des zweiten Pedals (3, 17) von einer vorgegebenen neutralen Position erkennt, und
- eine Steuereinheit (13), die so ausgebildet ist, dass sie einerseits Informationen über die Positionen der Pedale (2, 3, 16, 17) von den Vorrichtungen zum Erkennen der Pedalposition (11, 12, 33, 34) empfängt und andererseits Steuersignale als Funktion der Abweichungen berechnet und an das Antriebssystem überträgt, um ein Antriebs-oder Bremsmoment zu erzeugen,
**gekennzeichnet durch** den Schritt einer Rechnereinheit in der Steuereinheit (13), während ausgehend von einem Zustand, in dem sich die Pedale (2, 3, 16, 17) in ihren neutralen Positionen befinden, das Antriebsmoment als Funktion der Position des einen der Pedale (2, 3, 16, 17) berechnet wird, das zuerst veranlasst wird, von seiner neutralen Position abzuweichen, und dass die Rechnereinheit das Bremsmoment als Funktion
(i) der Position des einen der Pedale (2, 3, 16, 17), das zuerst veranlasst wird von seiner neutralen Position abzuweichen; oder
(ii) der Position des einen der Pedale (2, 3, 16, 17), das zuerst veranlasst wird von seiner neutralen Position abzuweichen und der Position des einen der Pedale (2, 3, 16, 17), das zuletzt veranlasst wird von seiner neutralen Position abzuweichen; oder
(iii) der Position des einen der Pedale (2, 3, 16, 17), das zuletzt veranlasst wird von seiner neutralen Position abzuweichen, berechnet wird,
wobei die Rechnereinheit einen Fahrtrichtungswechsel von der ersten Richtung in die zweite Richtung nur dann ermöglicht, wenn sich das erste Pedal (2, 16) in seiner neutralen Position befindet und das zweite Pedal (3, 17) veranlasst wird, aus seiner neutralen Position abzuweichen.

## Revendications

1. Système pour commander la propulsion d'un véhicule utilitaire ou de manutention, ledit système comprenant :
- un système de propulsion pour accélérer et ralentir le véhicule ;
- une première pédale (2, 16) pour un entraînement dans une première direction ;
- une seconde pédale (3, 17) pour un entraînement dans une seconde direction, qui est opposée à la première direction, ladite seconde pédale (3, 17) étant découplée mécaniquement de la première pédale (2, 16) ;
- un dispositif de détection de position de première pédale (11, 33), qui est agencé pour détecter l'écart de la première pédale (2, 16) par rapport à une position neutre prédéterminée ;
- un dispositif de détection de position de seconde pédale (12, 34), qui est agencé pour détecter l'écart de la seconde pédale (3, 17) par rapport à une position neutre prédéterminée ; et
- une unité de commande (13), qui est agencée, d'une part, pour recevoir des informations concernant les positions des pédales (2, 3, 16, 17) provenant des dispositifs de détection de position de pédale (11, 12, 33, 34) et, d'autre part, pour calculer en fonction desdits écarts, et transmettre, des signaux de commande au système de propulsion afin de générer un couple d'entraînement ou de freinage,
**caractérisé par le fait que** l'unité de commande (13) comprend une unité d'ordinateur qui, à partir d'un état dans lequel lesdites pédales (2, 3, 16, 17) sont dans leurs positions neutres, est agencée pour calculer le couple d'entraînement en fonction de la position de celle desdites pédales (2, 3, 16, 17) qui est amenée en première à s'écarter de sa position neutre, et que l'unité d'ordinateur est agencée pour calculer le couple de freinage en fonction de :
(i) la position de celle desdites pédales (2, 3, 16, 17) qui est amenée en première à s'écarter de sa position neutre ; ou
(ii) la position de celle desdites pédales (2, 3, 16, 17) qui est amenée en première à s'écarter de sa position neutre et la position de celle desdites pédales (2, 3, 16, 17) qui est amenée en dernière à s'écarter de sa position neutre ; ou
(iii) la position de celle desdites pédales (2, 3, 16, 17) qui est amenée en dernière à s'écarter de sa position neutre,
l'unité d'ordinateur étant agencée pour autoriser un changement de direction de déplacement de la première direction à la seconde direction uniquement lorsque la première pédale (2, 16) est dans sa position neutre et la seconde pédale (3, 17) est amenée à s'écarter de sa position neutre.

2. Système selon la revendication 1, **caractérisé par le fait que** lesdites positions neutres sont les positions d'extrémité supérieure de la pédale respective (2, 3, 16, 17).

3. Système selon l'une quelconque des revendications 1 ou 2, **caractérisé par le fait qu'**il comprend un système de freinage, lequel comprend une pédale de freinage (18) séparée desdites première et seconde pédales (2, 3, 16, 17), ledit système de freinage étant agencé pour générer un couple de freinage lorsque la pédale de freinage (18) est enfoncée, indépendamment des positions des première et seconde pédales (16, 17), et indépendamment de la direction dans laquelle le véhicule utilitaire ou de manutention est entraîné.

4. Procédé dans un système pour commander la propulsion d'un véhicule utilitaire ou de manutention, ledit système comprenant :
- un système de propulsion pour accélérer et ralentir le véhicule ;
- une première pédale (2, 16) pour un entraînement dans une première direction ;
- une seconde pédale (3, 17) pour un entraînement dans une seconde direction, qui est opposée à la première direction, ladite seconde pédale (3, 17) étant découplée mécaniquement de la première pédale (2, 16) ;
- un dispositif de détection de position de première pédale (11, 33), qui est agencé pour détecter l'écart de la première pédale (2, 16) par rapport à une position neutre prédéterminée ;
- un dispositif de détection de position de seconde pédale (12, 34), qui est agencé pour détecter l'écart de la seconde pédale (3, 17) par rapport à une position neutre prédéterminée ; et
- une unité de commande (13), qui est agencée, d'une part, pour recevoir des informations concernant les positions des pédales (2, 3, 16, 17) provenant des dispositifs de détection de position de pédale (11, 12, 33, 34) et, d'autre part, pour calculer en fonction desdits écarts, et transmettre, des signaux de commande au système de propulsion afin de générer un couple d'entraînement ou de freinage,
**caractérisé par** l'étape de calcul, par une unité d'ordinateur dans l'unité de commande (13), à partir d'un état dans lequel lesdites pédales (2, 3, 16, 17) sont dans leurs positions neutres, du couple d'entraînement en fonction de la position de celle desdites pédales (2, 3, 16, 17) qui est amenée en première à s'écarter de sa position neutre, et par le fait que l'unité d'ordinateur calcule le couple de freinage en fonction de :
(i) la position de celle desdites pédales (2, 3, 16, 17) qui est amenée en première à s'écarter de sa position neutre ; ou
(ii) la position de celle desdites pédales (2, 3, 16, 17) qui est amenée en première à s'écarter de sa position neutre et la position de celle desdites pédales (2, 3, 16, 17) qui est amenée en dernière à s'écarter de sa position neutre ; ou
(iii) la position de celle desdites pédales (2, 3, 16, 17) qui est amenée en dernière à s'écarter de sa position neutre,
l'unité d'ordinateur autorisant un changement de direction de déplacement de la première direction à la seconde direction uniquement lorsque la première pédale (2, 16) est dans sa position neutre et la seconde pédale (3, 17) est amenée à s'écarter de sa position neutre.
